# EUROPEAN PATENT APPLICATION

(11) **EP 3 446 604 A1**
(43) Date of publication of application: **27.02.2019**
(21) Application number: 17201731.1
(22) Date of filing: 14.11.2017
(51) Int. Cl.: A47J 37/07

(54) **A PARTICULATE FUEL GRILL DUST-BLOCKING DEVICE**

(30) Priority: 25.08.2017 CN 201710742072
(71) Applicant: Suzhou Tieta Machinery Manufacturing Co., Ltd., 215143 Suzhou Jiangsu (CN)
(72) Inventor: ZHAO, Jiawei, Suzhou, Jiangsu-Province 215143 (CN)
(74) Representative: Haseltine Lake LLP

(57) **Abstract**

The present invention is directed to providing a particulate fuel grill dust-blocking device (1), which can effectively collect dust particles generated during combustion of the biomass particles to ensure that the barbecue ingredients are hygienic and clean. The particulate fuel grill dust-blocking device (1) comprises a meshed plate (2) disposed between a burner (3) and a barbecue apparatus; the meshed plate (2), as a dust particle filter screen composed of a single or multiple layer(s), has its edge fixedly or further hermetically connected with the inner cavity wall of the grill body (1) of the particulate fuel grill, with a fire damper board (4) also provided between the meshed plate(2) and the burner (3). The meshed plate (2) disposed above the burner (3) can effectively collect the dust particles produced during combustion of the biomass particles to ensure the hygienic and clean barbecue ingredients. The fire damper board (4) can make the fire more evenly distributed, and the filter screen between the fire damper board and the burner can further enhance the filter effect.

## Description

### FIELD OF THE INVENTION

The present invention belongs to the field of cooking utensils, and more particularly to a dust collecting device for a biomass fuel barbecue grill.

### BACKGROUND OF THE INVENTION

A particulate fuel grill is an outdoor barbecue apparatus, and biomass particles used therein are safe and easy to use and can save resources. However, the biomass particles will also produce dust particles in the combustion process, which easily adhere to the ingredients and harmful to human health. At present, the commonly used solution is to set an air duct in the cavity of the grill body of the barbecue grill and evacuate the dust particles with an exhaust fan. However, such measures will affect the fire of the barbecue, lead to heat loss in the furnace cavity, reduce the utilization ratio of fuel, lower the barbecue effect greatly, and also increase fuel consumption and barbecue costs.

### CONTENTS OF THE INVENTION

The technical problem to be solved by the present invention is to provide a particulate fuel grill dust-blocking device, which can effectively collect the dust particles generated during combustion of the biomass particles to ensure the hygienic and clean barbecue ingredients.

In order to solve the above technical problem, the present invention adopts the following technical solution: A particulate fuel grill dust-blocking device is provided, comprising a meshed plate disposed between a burner and a barbecue apparatus, the meshed plate being a dust particle filter screen composed of a single or multiple layer(s).

Furthermore, the meshed plate has its edge fixedly connected with an inner cavity wall of a grill body of the particulate fuel grill.

Furthermore, the meshed plate has its edge hermetically connected with the inner cavity wall of the grill body of the particulate fuel grill.

Furthermore, a fire damper board is also provided between the meshed plate and the burner.

Furthermore, the fire damper board is fixed above the burner by means of a bracket.

Furthermore, a filter screen is hermetically provided between the fire damper board and the burner.

The present invention is advantageous in the following aspects: The meshed plate disposed above the burner can effectively collect the dust particles produced during combustion of the biomass particles to ensure the hygienic and clean barbecue ingredients. The fire damper board can make the fire more evenly distributed, and the filter screen between the fire damper board and the burner can further enhance the filter effect.

### BRIEF DESCRIPTION OF THE DRAWINGS

The present invention will be further described below with reference to drawings.

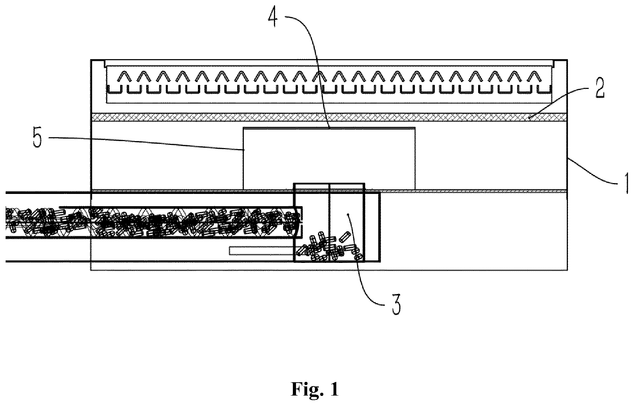

Fig. 1 is a schematic view of the present invention.

List of reference numbers: 1. A grill body; 2. a meshed plate; 3. a burner; 4. a fire damper board; and 5. a filter screen.

### DETAILED DESCRIPTION OF THE EMBODIMENTS

The present invention will be described below in detail with reference to drawings and embodiments.

As shown in Fig. 1, a meshed plate 2, located above a burner 3 and under a barbecue apparatus, is provided on the inner cavity wall of a grill body 1. The flames generated by the combustion of the biomass particles in the burner 3 are spread over the meshed plate 2 to the bottom of the barbecue apparatus. The meshed plate 2, as a dust particle filter screen composed of a single or multiple layer(s), can adsorb the dust particles generated during the combustion, so as to prevent the dust particles from adhering to the ingredients, thereby ensuring clean and hygienic ingredients.

The meshed plate 2, having its edge fixed to the inner cavity wall of the grill body 1, separates the lower burning portion of the grill body 1 from the upper barbecue portion of the same. The meshed plate 2 also has its edge hermetically connected with the inner cavity wall of the grill body 1, so as to further enhance the blocking effect of the meshed plate 2 against the dust particles.

Afire damper board 4 is also provided below the meshed plate 2 and above the burner 3, and a filter screen 5 is hermetically provided between the fire damper board 4 and the outlet of the burner 3. The flame emitted from the outlet of the burner 3 spreads around the filter screen 5 after being blocked by the fire damper board 4, so that the fire is more evenly distributed in the cavity of the grill body 1, with the filter screen 5 serving as an initial filter for the dust particles. The fire damper board 4 may also be fixed with a bracket instead of a filer screen 5, thus having a simpler structure.

It is necessary to emphasize that what is described above is only a preferred example of the present invention and is not intended to limit the present invention in any way. Any and all simple amendments, equivalents, and modifications of the foregoing example in accordance with the technical substance of the present invention are intended to be within the scope of the technical solution of the present invention.

## Claims

1. A particulate fuel grill dust-blocking device, **characterized in that**: it comprises a meshed plate disposed between a burner and a barbecue apparatus, with the meshed plate being a dust particle filter screen composed of a single or multiple layer(s).

2. The particulate fuel grill dust-blocking device according to claim 1, **characterized in that**: the meshed plate has its edge fixedly connected with an inner cavity wall of a grill body of the particulate fuel grill.

3. The particulate fuel grill dust-blocking device according to claim 2, **characterized in that**: the meshed plate has its edge hermetically connected with the inner cavity wall of the grill body of the particulate fuel grill.

4. The particulate fuel grill dust-blocking device according to claim 1, **characterized in that**: a fire damper board is also provided between the meshed plate and the burner.

5. The particulate fuel grill dust-blocking device according to claim 4, **characterized in that**: the fire damper board is fixed above the burner by means of a bracket.

6. The particulate fuel grill dust-blocking device according to claim 5, **characterized in that**: a filter screen is hermetically provided between the fire damper board and the burner.
